# FASCICULE DE BREVET EUROPEEN

(11) **EP 3 216 040 B1**
(45) Date de publication et mention de la délivrance du brevet: **16.02.2022**
(21) Numéro de dépôt: 15800728.6
(22) Date de dépôt: 30.10.2015
(51) Int. Cl.: H01G 11/68, H01G 11/28, H01G 11/86

(54) **ELECTRODES CONDUCTRICES ET LEUR PROCEDE DE FABRICATION**
LEITFÄHIGE ELEKTRODEN UND DEREN HERSTELLUNGSVERFAHREN
CONDUCTIVE ELECTRODES AND THEIR MANUFACTURING PROCESS

(30) Priorité: 03.11.2014 FR 1460575
(43) Date de publication de la demande: 13.09.2017
(73) Titulaire: Hutchinson, 75008 Paris (FR)
(72) Inventeur: BUFFRY, Carole, 45700 Pannes (FR); DUFOUR, Bruno, 77430 Champagne sur Seine (FR); MORISSET, Elodie, 45200 Montargis (FR); SONNTAG, Philippe, 77210 Avon (FR)
(74) Mandataire: Corizzi, Valérie
(86) Numéro de dépôt international: PCT/EP2015/075209
(87) Numéro de publication internationale: WO 2016/071217

(56) Documents cités:
- EP-A1- 2 471 869
- EP-A1- 2 738 855
- EP-B1- 2 738 855
- WO-A1-2014/042080
- JP-A- 2014 199 804
- US-A1- 2014 209 480
- US-B1- 6 671 165

## Description

L'invention concerne le domaine des dispositifs électrochimiques de stockage d'énergie électrique. Elle concerne notamment les batteries et les supercondensateurs. Elle concerne plus particulièrement des électrodes comprenant au moins un collecteur de courant métallique revêtu par une ou plusieurs couches de protection formulées en base aqueuse, la couche de protection étant placée entre le collecteur de courant et la matière active. La formulation de la couche de protection en base aqueuse présente l'avantage d'éviter l'utilisation de solvants organiques inflammables, toxiques, et néfastes pour l'environnement. Ce système est utilisé dans des super-condensateurs à électrolyte aqueux, la couche de protection permettant une réduction très significative des problèmes de corrosion qui sont généralement associés à l'utilisation d'électrolytes aqueux. La couche de protection permet d'améliorer l'adhésion de la matière active sur le collecteur métallique.

Les électrodes de l'invention peuvent aussi être utilisées comme électrodes de super-condensateur fonctionnant avec un électrolyte de type liquide ionique. Dans ce cas, la couche de protection permet d'améliorer l'adhésion et ainsi réduire la résistance équivalente série de la matière active sur le collecteur métallique.

### Etat de la technique antérieure

Les supercondensateurs consistent généralement en l'association de deux électrodes conductrices à haute surface spécifique, immergées dans un électrolyte ionique et séparées par une membrane isolante appelée séparateur, lequel permet la conductivité ionique et évite le contact électrique entre les électrodes. Chaque électrode comporte au moins un collecteur de courant métallique et une couche de matière active. Le collecteur de courant métallique permet l'échange du courant électrique avec un système extérieur. Sous l'influence d'une différence de potentiel appliquée entre les deux électrodes, les ions présents au sein d'un électrolyte sont attirés par la surface présentant une charge opposée formant ainsi une double couche électrochimique à l'interface de chaque électrode. L'énergie électrique est ainsi stockée de manière électrostatique par séparation des charges.

L'expression de la capacité de ces supercondensateurs est identique à celle de condensateurs électriques classiques, à savoir : C = E.S/e
avec : E : la permittivité du milieu,
S : la surface occupée par la double couche, et
e : l'épaisseur de la double couche.

Les capacités atteignables au sein de supercondensateurs sont beaucoup plus importantes que celles communément atteintes par des condensateurs classiques, ceci du fait de l'utilisation d'électrodes poreuses à haute surface spécifique (maximisation de la surface) et de l'extrême étroitesse de la double couche électrochimique (quelques nanomètres).

L'énergie stockée au sein du supercondensateur est définie selon l'expression classique des condensateurs, soit: E = 1/2.C.V², dans laquelle V est le potentiel électrique de la supercapacité.

La capacité et le potentiel doivent donc être élevés pour optimiser les performances énergétiques. La capacité dépend de la texture poreuse réellement accessible par l'électrolyte.

Les électrodes carbonées utilisées au sein de systèmes super-capacitifs doivent nécessairement être : conductrices, afin d'assurer le transport des charges électriques, poreuses, afin d'assurer le transport des charges ioniques et la formation de la double couche électrique sur une grande surface, et chimiquement inertes, pour éviter toutes réactions parasites consommatrices d'énergie.

Le potentiel dépend principalement de la nature de l'électrolyte et en particulier de la stabilité de l'électrolyte sous l'influence du champ électrique. Il existe différents types d'électrolytes. Les électrolytes organiques, c'est-à-dire comportant un sel organique dispersé dans un solvant organique permettent d'atteindre un potentiel de fonctionnement de 2.7V. Mais ces électrolytes sont chers, inflammables, toxiques et potentiellement polluants. Ils posent ainsi des problèmes de sécurité pour une utilisation dans un véhicule. Les électrolytes aqueux sont peu chers et non inflammables, ils sont donc plus intéressants pour cette application. En milieu aqueux, le potentiel applicable est de 1.2V. Différents électrolytes aqueux peuvent être utilisés, par exemple une solution aqueuse d'acide sulfurique, ou de chlorure de potassium, ou de sulfate de potassium, ou d'autres sels en milieu acide, basique ou neutre.

La couche de matière active étant poreuse, et une partie au moins de l'électrode étant immergée dans l'électrolyte, le collecteur de courant est susceptible d'être corrodé par l'électrolyte aqueux. Ainsi la durée de vie de l'électrode est réduite par le manque de résistance à la corrosion du collecteur de courant.

Par ailleurs, dans le cas où le collecteur est en aluminium, en fonctionnement il se forme une couche de passivation composée d'alumine hydratée Al₂O₃,xH₂O qui le protège de la corrosion. Mais cette couche de passivation, du fait de ses propriétés isolantes ioniques et électroniques, a pour effet d'augmenter la résistance à l'interface aluminium/matière active.

De plus, lorsque l'aluminium constitue le collecteur de courant positif, cette couche d'alumine croît et se densifie, au fur et à mesure des cycles électriques auxquels est soumis le supercondensateur. L'aluminium peut même, au contact avec certains électrolytes, perdre son caractère passif, ce qui entraîne sa dissolution accélérée.

Les mêmes problèmes ont été constatés avec d'autres matériaux formant les collecteurs de courant, tels que le titane.

Pour remédier à l'ensemble de ces problèmes, différentes solutions ont été proposées. La plupart consistent à revêtir le collecteur de courant par une ou plusieurs couches de protection qui sont placées entre le collecteur de courant et la couche active.

Pour permettre une protection satisfaisante du collecteur de courant, la couche de protection doit être étanche à l'électrolyte de façon à empêcher celui-ci de venir en contact avec le collecteur métallique et le corroder. Il est nécessaire qu'elle soit capable d'assurer cette protection sur toute la gamme de température de fonctionnement du système, typiquement jusqu'à 60°C. La couche de protection doit également assurer un bon contact électrique entre le collecteur métallique et la matière active afin d'avoir une résistance équivalente série (ESR) du super-condensateur minimale. Une faible ESR est nécessaire pour un fonctionnement du super-condensateur à de fortes puissances. Elle doit présenter une adhésion satisfaisante sur le matériau métallique dont est constitué le collecteur de courant. Enfin, le poids et le volume de la couche de protection doivent être les plus faibles possibles afin de limiter la masse et le volume du super-condensateur. Une configuration favorite pour des électrodes de supercondensateur étant une configuration enroulée, une autre propriété des électrodes doit être leur flexibilité. Ainsi, la couche de protection doit également présenter des propriétés de flexibilité.

Plusieurs couches de protection pour collecteur de courant ont été décrites dans l'art antérieur :
Pour diminuer les problèmes de corrosion et de passivation, US 4 562 511 enseigne de recouvrir le collecteur d'aluminium avec une peinture chargée en particules conductrices. Toutefois cette peinture tend à accroître la résistance du système.

Dans FR 2824418, une couche de peinture comprenant des particules conductrices, comme du graphite ou du noir de carbone est appliquée entre le collecteur et la matière active, puis est chauffée pour éliminer le solvant. La peinture est à base de polymère époxy et/ou polyuréthane. Cette peinture est formulée en milieu solvant organique. Cette couche permet de protéger le collecteur en milieu organique. Toutefois, on ne connaît pas le comportement d'un tel collecteur en présence d'un électrolyte aqueux.

US 2009/0155693 décrit une méthode de formation d'un film mince de carbone sur un collecteur de courant par dépose d'une dispersion de particules carbonées dans une matrice de polymère de type sol-gel organique suivie de l'élimination du sol-gel par dégradation thermique à haute température. Cette couche permet d'améliorer les propriétés de conduction au niveau du contact. Aucune information n'est donnée sur l'étanchéité en milieu aqueux. De plus, les films carbonés obtenus par cette méthode sont fragiles et sujets à l'abrasion lors de l'assemblage des électrodes.

WO 200701201 et US2006/0292384 décrivent une couche de protection d'un collecteur métallique, constituée d'un liant polymère, qui peut être un époxy, et de charges conductrices carbonées sous forme de poudre. La partie expérimentale décrit un collecteur à base de plomb et une couche de protection à base de poly(chlorure de vinyle). Cette couche de protection est étanche à l'acide sulfurique. Toutefois, les compositions de protection du collecteur sont formulées en milieu solvant organique. Aucune information n'est donnée sur le contact électrique entre le collecteur métallique et la matière active. Aucune information n'est donnée sur l'étanchéité dans d'autres électrolytes aqueux, notamment le nitrate de lithium à 5M dans l'eau.

FR2977364 décrit des collecteurs de courant métalliques recouverts par une couche de protection constituée par des charges conductrices dispersées dans une matrice de copolymère. Le système décrit permet une amélioration du contact électrique entre le collecteur métallique et la matière active, ainsi qu'une étanchéité à l'acide sulfurique. Le copolymère mis en œuvre est à base de chlorure de vinyle et/ou d'acétate de vinyle et la composition protectrice est préparée en milieu organique.

Le document US2012/0237824 décrit des collecteurs de courant pour électrodes de batterie au lithium avec une résistance à la corrosion. Le collecteur de courant est revêtu d'une couche protectrice à base de résine fluorée. La couche protectrice peut en outre contenir comme additifs : de fines particules de caoutchouc pour améliorer la flexibilité, un promoteur d'adhésion tel qu'une résine époxy, un agent réticulant de la résine fluorée afin de réduire son gonflement. Toutefois, les compositions protectrices enseignées par ce document sont à base de solvant organique.

JPH0582396 décrit un assemblage d'un collecteur de courant en un matériau de type caoutchouc et d'une couche de matériau actif, l'assemblage comprenant une couche adhésive intermédiaire à base de noir de carbone ou de graphite et d'une résine, qui peut être une résine polycarbodiimide, ABS, époxy, polyphénylène sulfate, uréthane, acrylique, polyester. La composition adhésive est formulée en milieu solvant organique. La couche active est fixée sur le collecteur de courant par pressage à chaud sur le collecteur revêtu de l'adhésif.

EP2207188 décrit une électrode de supercondensateur comprenant une couche de matière active formulée en milieu aqueux et comprenant un matériau conducteur, un liant de carboxyméthylcellulose et de résine élastomère acrylique.

JP2000100441 décrit une électrode pour batterie au lithium comprenant une couche de matière active comprenant un matériau conducteur, un liant à base d'élastomère réticulé thermoplastique, tel qu'un polyester amide.

Toutefois, une couche de matière active ne présente pas les mêmes caractéristiques qu'une couche de protection du collecteur de courant. En particulier, la couche de matière active doit présenter une porosité élevée, au contraire de la couche de protection.

EP 2 471 869 décrit des compositions aqueuses à base de polymères de type polysaccharide ou polyamine, une charge hydrophobe et un polyacide, ces compositions étant utilisées pour former un revêtement de protection sur une électrode.

JP 2014 199804 enseigne une composition destinée à favoriser l'adhésion entre le collecteur de courant et la couche active d'électrode, cette composition comprenant un matériau conducteur carboné (A), une résine (B) hydrosoluble formant un liant, une dispersion aqueuse de résine (C) se liant aux fines particules.

Il n'existe pas à l'heure actuelle d'électrodes permettant le fonctionnement d'un supercondensateur dans un électrolyte aqueux, avec un revêtement de protection du collecteur de courant formulé en base aqueuse, l'électrode présentant à la fois une faible ESR, une bonne résistance à la corrosion, une stabilité à haute température sur un grand nombre de cycles, et des propriétés de flexibilité satisfaisantes.

L'invention a permis de résoudre ces problèmes constatés dans les électrodes de l'art antérieur.

### Résumé de l'invention

L'invention concerne une électrode pour le stockage de l'énergie électrique comprenant un collecteur de courant métallique et une matière active, le collecteur de courant étant revêtu sur au moins une partie de l'une de ses faces par au moins une couche de protection placée entre le collecteur de courant et la matière active, la couche de protection comprenant :
(A) Une matrice de polymère comprenant :
   (A1) Au moins un polymère ou un copolymère époxy réticulé,
   (A2) Au moins un élastomère,
(B) Des charges conductrices,
   caractérisée en ce que la couche de protection comprend :
      - de 30 à 60 % d'au moins un polymère ou un copolymère époxy réticulé (A1),
      - de 10 à 30 % d'au moins un élastomère (A2),
      - de 30 à 50 % de charges conductrices (B),
   la somme des masses de (A1), (A2) et (B) représente de 95 à 100 %,
   en masse de matière sèche, par rapport à la masse totale de matière sèche de la couche de protection (5).

L'invention concerne également un procédé de fabrication d'une électrode comprenant :
1- La fourniture d'un collecteur de courant métallique,
2- La préparation d'une composition aqueuse (G),
3- le dépôt de la composition (G) sur une partie au moins d'une face du collecteur de courant,
4- un premier traitement thermique de séchage de la composition (G),
5- un second traitement thermique du collecteur de courant revêtu à une température supérieure à la température de transition vitreuse du polymère ou du copolymère époxy réticulé (A1), et inférieure à la température de dégradation du polymère ou du copolymère époxy réticulé (A1),
6- le dépôt d'une couche de matière active sur le collecteur de courant revêtu,

ce procédé étant caractérisé en ce que la composition aqueuse (G) comprend :
   - de 30 à 60 % de précurseurs d'une matrice époxy réticulée (A1),
   - de 10 à 30 % d'au moins un élastomère (A2),
   - de 30 à 50 % de charges conductrices (B)
et la somme des masses de (A1), (A2) et (B) représente de 95 à 100 %,
en masse de matière sèche, par rapport à la masse totale de matière sèche de la composition aqueuse (G).

L'invention a encore pour objet un supercondensateur comprenant deux électrodes dont au moins une partie est immergée dans un électrolyte ionique, les deux électrodes étant séparées par une membrane isolante, l'une au moins des deux électrodes étant suivant l'invention décrite ci-dessus et illustrée de façon détaillée ci-dessous.

Selon un mode de réalisation préféré, la couche de protection est obtenue par le séchage et la réticulation d'une composition aqueuse (G) comprenant :
- des précurseurs de la matrice de polymère (A) :
   - des précurseurs de polymère(s) ou de copolymère(s) époxy réticulé(s) (A1)
   - au moins un élastomère (A2),
- des charges conductrices (B).

Selon un mode de réalisation préféré, la couche de protection est obtenue par le séchage et la réticulation d'une composition aqueuse (G) consistant essentiellement en :
- des précurseurs de la matrice de polymère (A) :
   - des précurseurs de polymère(s) ou de copolymère(s) époxy réticulé(s) (A1)
   - au moins un élastomère (A2),
- des charges conductrices (B).

Selon un mode de réalisation préféré, le collecteur de courant (3) est en aluminium ou en cuivre.

Selon un mode de réalisation préféré, (A2) est choisi parmi : les élastomères ayant une température de filmification inférieure à 20°C.

Selon un mode de réalisation préféré, (A1) est choisi parmi : un polymère époxy réticulé, un copolymère époxy-alkyde réticulé, un mélange de polymère époxy et de résine alkyde réticulé.

Selon un mode de réalisation préféré, (A1) est un copolymère époxy-alkyde réticulé.

Selon un mode de réalisation préféré, (A2) est choisi parmi les latex butadiène-acrylonitrile (NBR) et les latex polyuréthanes.

Selon un mode de réalisation préféré, (B) est choisi parmi : les mélanges de noir de carbone et de graphite.

Selon un mode de réalisation préféré,
- la composition de polymère (A) représente de 50 à 70 %,
- les charges conductrices (B) représentent de 30 à 50 %,

et la somme des masses de (A) et de (B) représente de 95 à 100 %, avantageusement de 98 à 100%, et de manière préférée de 99 à 100%,
en masse de matière sèche, par rapport à la masse totale de matière sèche de la couche de protection.

Selon un mode de réalisation préféré, la couche de protection comprend :
- de 30 à 60 % d'au moins un polymère ou un copolymère époxy réticulé (A1),
- de 10 à 30 % d'au moins un élastomère (A2),
- de 30 à 50 % de charges conductrices (B),

la somme des masses de (A1), (A2) et (B) représente de 98 à 100%, et de manière préférée de 99 à 100%,
en masse de matière sèche, par rapport à la masse totale de matière sèche de la couche de protection.

Selon un mode de réalisation préféré, la couche de protection présente une épaisseur allant de 5 à 50 µm.

Selon un mode de réalisation préféré, une couche d'apprêt est placée entre le collecteur de courant métallique et la couche de protection.

Selon un mode de réalisation préféré, une couche d'apprêt est placée entre la couche de protection et la matière active.

Selon un mode de réalisation préféré, le procédé de l'invention comporte en outre une étape de préparation du collecteur de courant avant le dépôt de la composition (G), cette étape comprenant une ou plusieurs étapes choisies parmi : un traitement abrasif, un traitement chimique.

Selon un mode de réalisation préféré du procédé de l'invention, le dépôt de la composition (G) sur le collecteur de courant est réalisé à l'aide d'un tire-film.

Selon un mode de réalisation préféré du procédé de l'invention, l'étape de dépôt 3- suivie d'un séchage 4- est mise en œuvre une ou plusieurs fois jusqu'à obtenir une épaisseur de dépôt après séchage de 5 à 50 µm.

Selon un mode de réalisation préféré du procédé de l'invention, la température de traitement à l'étape 5- est de 120 à 160°C, préférentiellement de 130 à 150°C.

Selon un mode de réalisation préféré du procédé de l'invention, la préparation et le dépôt de la matière active comporte les sous-étapes suivantes :
(i) - préparation d'une composition aqueuse de matière active,
(ii) - dépôt de la composition de matière active sur la couche de protection,
(iii) - traitement thermique de séchage.

Selon un mode de réalisation préféré du procédé de l'invention, l'étape 6- de dépôt d'une couche de matière active est réalisée avant l'étape 5- de second traitement thermique.

Selon un mode de réalisation préféré du supercondensateur de l'invention, l'électrolyte est un électrolyte aqueux.

Selon un mode de réalisation préféré du supercondensateur de l'invention, l'électrolyte est un liquide ionique.

Selon un mode de réalisation préféré du supercondensateur de l'invention, les deux électrodes sont suivant l'invention décrite ci-dessus et illustrée de façon détaillée ci-dessous.

### Description détaillée

### Le collecteur de courant :

De façon connue, Le matériau utilisé pour le collecteur de courant peut être par exemple l'aluminium et ses alliages, le cuivre et ses alliages, l'acier inoxydable, le nickel et ses alliages, le titane et ses alliages, et les matériaux résultant du traitement de la surface de l'aluminium ou de l'acier inoxydable ou du titane par le carbone. Parmi ceux-ci, l'aluminium et ses alliages, le cuivre et ses alliages sont des exemples préférés. Avantageusement, le collecteur de courant est en aluminium ou en cuivre. Ces matériaux peuvent également être soumis à un traitement d'oxydation de la surface avant utilisation. L'introduction de micro-reliefs à la surface du collecteur de courant par un traitement de surface est avantageuse car elle permet d'améliorer l'adhérence du matériau. L'épaisseur du collecteur de courant est généralement dans la gamme de 5 à 30 µm.

### La couche de protection :

La couche de protection comporte une matrice polymérique (A) comprenant au moins au moins un polymère ou un copolymère époxy réticulé (A1), et au moins un élastomère (A2). Elle comprend également un matériau conducteur de type charge (B).

De préférence dans la couche de protection selon l'invention :
- la matrice de polymère (A) représente de 50 à 70 %,
- les charges conductrices (B) représentent de 30 à 50 %,
- la somme des masses de (A) et de (B) représente de 95 à 100 %,
en masse de matière sèche, par rapport à la masse de matière sèche totale de la couche de protection.

De préférence la somme des masses de (A) et de (B) représente de 98 à 100%, encore plus préférentiellement de 99 à 100%, en masse de matière sèche, par rapport à la masse totale de matière sèche de la couche de protection.

Par matrice de polymère on entend au sens de la présente invention un matériau résultant du séchage et éventuellement de la réticulation de polymères, de copolymères, d'agents réticulants, et d'additifs, tels que notamment des catalyseurs de réticulation, des agents tensioactifs, des agents dispersants, des agents mouillants.

La matrice de polymère est obtenue à partir d'une composition de polymère, par séchage et réticulation. En pratique, la composition de polymère est mélangée avec les autres composants, notamment les charges électro-conductrices, pour former une composition de revêtement ou composition de protection (G) sous la forme d'une dispersion aqueuse. La composition de protection est séchée puis soumise à un traitement (chauffage par exemple) qui déclenche la réaction de réticulation. La matrice de polymère se forme à la suite de ce traitement. On obtient alors la couche de protection.

Selon l'invention, la couche de protection comprend :
- de 30 à 60 % d'une matrice époxy réticulée (A1),
- de 10 à 30 % d'au moins un élastomère (A2),
- de 30 à 50 % de charges conductrices (B)

et la somme des masses de (A1), (A2) et (B) représente de 95 à 100 %,
en masse de matière sèche, par rapport à la masse totale de matière sèche de la couche de protection.

De préférence la somme des masses de (A1), (A2) et (B) représente de 98 à 100%, encore plus préférentiellement de 99 à 100%, en masse de matière sèche, par rapport à la masse totale de matière sèche de la couche de protection.

### La matrice de polymère (A) :

La matrice de polymère (A) comprend :
(A1) Au moins un polymère ou un copolymère époxy réticulé,
(A2) Au moins un élastomère.

Par matrice de polymère on entend préférentiellement au sens de la présente invention un matériau constitué essentiellement de polymères, de copolymères, d'agents réticulants, et d'additifs mis en œuvre pour la fabrication de cette matrice, tels que notamment des catalyseurs de réticulation, des agents tensioactifs.

De préférence, la matrice de polymère (A) consiste essentiellement en un ou des polymère(s) ou copolymère(s) époxy réticulé(s), un ou des élastomère(s), des agents réticulants, des catalyseurs de réticulation, des agents tensioactifs, des agents dispersants, des agents mouillants.

De préférence, (A1) est choisi parmi : un polymère époxy réticulé, un copolymère époxy-alkyde réticulé, un mélange de polymère époxy et de résine alkyde réticulé.

Encore plus préférentiellement (A1) est un copolymère époxy-alkyde réticulé.

Comme exemple de résine époxy, on peut citer :
- les résines époxy glycidyle qui sont préparées par une réaction de condensation du composé dihydroxy approprié avec un diacide ou une diamine et avec de l'épichlorhydrine, comme par exemple le diglycidyl éther de bisphénol A (DGEBA)
- les résines époxy Novolac qui sont des glycidyléthers de résines phénoliques Novolac. Elles sont obtenues par réaction du phénol avec le formaldéhyde en présence d'un catalyseur acide pour produire une résine phénolique Novolac, suivie d'une réaction avec l'épichlorhydrine.

Comme exemple de copolymère époxy-alkyde on peut citer une résine alkyde contenant un groupe carboxyle avec laquelle on a fait réagir la résine époxy par une réaction d'estérification carboxy/époxy.

Parmi les agents réticulants, on peut citer les réticulants amines tels que les mélamines, notamment l'hexaméthoxyméthylmélamine.

De préférence l'agent réticulant représente de 10 à 40%, de préférence de 15 à 35%, encore mieux de 20 à 30%, en masse par rapport à la masse de (A1) en matière sèche.

De préférence le catalyseur est mis en œuvre en quantité allant de 0,1 à 2,5 % en masse par rapport à la masse d'agent réticulant, en matière sèche.

Parmi les catalyseurs, on peut citer l'acide paratoluène sulfonique.

De préférence (A1) est une matrice époxy réticulée, c'est-à-dire un matériau résultant de la réticulation d'une composition de polymère époxy. De préférence (A1) est un matériau obtenu à partir d'une composition de polymère dont au moins 30% en masse de matière sèche est constitué de polymère époxy ou de fragments époxy dans un copolymère. De préférence (A1) est un matériau consistant essentiellement en un polymère époxy réticulé ou un copolymère époxy réticulé ou un mélange réticulé d'un époxy et d'un autre polymère, comme une résine alkyde. Il peut rester dans (A1) des quantités plus ou moins importantes de polymère ou de copolymère non réticulé, d'agent réticulant n'ayant pas réagi, le catalyseur, les tensioactif, les agents mouillants, les dispersants.

(A1) est mis en œuvre dans l'invention sous forme d'une composition de polymère (C_{A1}). Il s'agit d'une composition aqueuse qui comprend le (co)polymère ou le mélange de (co)polymères, l'agent réticulant, le catalyseur et éventuellement des tensioactifs. De telles compositions sont disponibles commercialement ou peuvent être préparées facilement à partir de produits disponibles dans le commerce.

De préférence l'élastomère (A2) est un élastomère ou un mélange d'élastomères choisis parmi les élastomères ayant une température de filmification inférieure à 20°C.

(A2) peut être choisi parmi les élastomères réticulés ou non réticulés, il peut être choisi parmi les latex naturels ou de synthèse comme par exemple les latex butadiène-acrylonitrile (NBR), les latex butadiène-acrylonitrile hydrogénés (NBR), les latex polyuréthanes, les latex acryliques, les latex styrène butadiène (SBR), les latex butyles, les latex acrylonitrile-butadiène-styrène (ABS), et leurs mélanges.

(A2) peut être réticulé simultanément à la réticulation de (A1), sous l'effet d'un même réticulant que (A1) ou sous l'action d'un réticulant spécifique.

De préférence (A2) est choisi parmi les latex butadiène-acrylonitrile (NBR) et les latex polyuréthanes.

(A2) est mis en œuvre dans l'invention sous forme d'une composition de latex (C_{A2}). Il s'agit d'une composition aqueuse qui comprend l'élastomère et des tensioactifs. Elle peut en outre comprendre des agents réticulants. De telles compositions sont disponibles commercialement ou peuvent être préparées facilement à partir de produits disponibles dans le commerce.

Selon un mode de réalisation préféré, la couche de protection comprend :
- de 30 à 60 % d'une matrice (A1) choisie parmi : un polymère époxy réticulé, un copolymère époxy-alkyde réticulé, un mélange de polymère époxy et de résine alkyde réticulé,
- de 10 à 30 % d'au moins un élastomère (A2) choisi parmi : les latex butadiène-acrylonitrile (NBR) et les latex polyuréthanes,
- de 30 à 50 % de charges conductrices (B)

et la somme des masses de (A1), (A2) et (B) représente de 95 à 100 %, avantageusement 98 à 100%, encore plus préférentiellement de 99 à 100%,
en masse de matière sèche, par rapport à la masse totale de matière sèche de la couche de protection.

### La composition (G) :

Selon l'invention la couche de protection est obtenue par le séchage et la réticulation d'une composition aqueuse (G) comprenant :
- des précurseurs de la matrice de polymère (A) :
   - des précurseurs de polymère(s) ou de copolymère(s) époxy réticulé(s) (A1)
   - au moins un élastomère (A2),
- des charges conductrices (B).

De préférence, dans la composition aqueuse (G) :
- les précurseurs de la matrice de polymère (A) représentent de 50 à 70%,
- les charges conductrices (B) représentent de 30 à 50 %,

la somme des masses de (A) et de (B) représente de 95 à 100 %,
en masse de matière sèche, par rapport à la masse de matière sèche totale de la composition aqueuse (G).

De préférence, la somme des masses de (A) et de (B) représente de 98 à 100 %, encore mieux de 99 à 100% en masse de matière sèche, par rapport à la masse de matière sèche totale de la composition aqueuse (G).

Selon l'invention, la composition aqueuse (G) comprend :
- de 30 à 60 % de précurseurs d'une matrice époxy réticulée (A1),
- de 10 à 30 % d'au moins un élastomère (A2),
- de 30 à 50 % de charges conductrices (B)

et la somme des masses de (A1), (A2) et (B) représente de 95 à 100 %,
en masse de matière sèche, par rapport à la masse totale de matière sèche de la composition aqueuse (G).

De préférence, la somme des masses de (A1), (A2) et (B) représente de 98 à 100%, encore mieux de 99 à 100% en masse de matière sèche, par rapport à la masse de matière sèche totale de la composition aqueuse (G).

Selon un mode de réalisation préféré, la composition aqueuse (G) comprend :
- de 30 à 60 % de précurseurs d'une matrice époxy réticulée (A1), (A1) étant choisie parmi : un polymère époxy réticulé, un copolymère époxy-alkyde réticulé, un mélange de polymère époxy et de résine alkyde réticulé,
- de 10 à 30 % d'au moins un élastomère (A2) choisi parmi : les latex butadiène-acrylonitrile (NBR) et les latex polyuréthanes,
- de 30 à 50 % de charges conductrices (B)

et la somme des masses de (A1), (A2) et (B) représente de 95 à 100 %, avantageusement 98 à 100%, encore plus préférentiellement de 99 à 100%,
en masse de matière sèche, par rapport à la masse totale de matière sèche de la composition aqueuse (G).

Par précurseurs de la matrice de polymère, on entend les monomères, pré-polymères, polymères et copolymères, les agents réticulants et les additifs mis en œuvre pour la fabrication de cette matrice, tels que notamment des catalyseurs de réticulation, des agents tensioactifs, des agents dispersants, des agents mouillants.

La proportion des composants de la couche de protection est contrôlée par le choix des proportions des composants de la composition de protection (G).

De façon connue, le traitement thermique est mis en œuvre à une température et pour une durée suffisantes pour entraîner la réticulation du ou des polymère(s) ou copolymère(s) époxy.

La composition aqueuse (G) peut être préparée par mélange des différents constituants de (C_{A1}), (C_{A2}) et (B) dans n'importe quel ordre : par exemple les charges conductrices peuvent être introduites en partie dans (C_{A1}) et (C_{A2}) avant le mélange de ces dernières ou elles peuvent être introduites après que (C_{A1}) et (C_{A2}) aient été mélangées.

Pour faciliter l'obtention d'une composition stable et homogène, on peut y incorporer de façon connue de l'homme du métier des tensioactifs, des agents dispersants, des agents mouillants et des solvants miscibles à l'eau tels que des alcools, notamment de l'éthanol ou de l'isopropanol.

La composition aqueuse (G) présente un extrait sec qui est avantageusement de 25 à 50%, de préférence de 30 à 45% en masse. Le choix de l'extrait sec est adapté par l'homme du métier en fonction de la méthode d'application de la composition.

### Charge conductrice :

Par charge conductrice de l'électricité au sens de l'invention on entend une charge ayant une résistivité volumique de 1 × 10⁻⁹ à 1 Ω.cm. La résistivité volumique préférée est de 1 × 10⁻⁶ à 1 × 10⁻¹ Ω.cm.

La charge électro-conductrice peut être choisie par exemple parmi les charges de carbone conductrices de l'électricité.

Ces charges conductrices de l'électricité peuvent être sous forme de particules, sous forme de fibres, ou un mélange de différents types de charges.

Parmi les charges de carbone sous forme de particules on peut citer le noir de carbone, le noir d'acétylène, le carbone nanoporeux, le graphite (graphite naturel, graphite artificiel). Un diamètre moyen de particules primaires de 0,002 à 20 µm et en particulier de 0,025 à 10 µm, est préféré pour l'obtention d'une conductivité électrique élevée.

Parmi les charges de carbone sous forme de fibres on peut citer les fibres de carbone, les nanotubes de carbone, les nanofibres de carbone.

La charge conductrice est constituée de préférence d'au moins une charge choisie dans le groupe constitué par le noir de carbone, le noir d'acétylène, le carbone nanoporeux, le graphite, les fibres de carbone, les nanotubes de carbone, et les nanofibres de carbone. De préférence on met en œuvre l'invention avec une charge choisie parmi : les mélanges de noir de carbone et de graphite. Avantageusement on choisit comme charge conductrice des mélanges présentant une proportion en masse noir de carbone / graphite allant de 4/1 à 1/1.

La charge électro-conductrice est préférentiellement incorporée en quantités allant de 30 à 50 % en masse de matière sèche par rapport à la masse de matière sèche de la composition de protection ou de la composition aqueuse (G).

Il est préférable de mettre en œuvre au moins 30% en masse de charges électro-conductrices pour obtenir une conductivité électrique satisfaisante de la couche de protection. D'autre part, la fabrication de la composition est problématique lorsque l'on met en oeuvre plus de 50 % en masse de charges électro-conductrices : facilité de mélange, stabilité du revêtement au dépôt et au cours du séchage.

### Tensioactifs :

Avantageusement, la composition aqueuse (G) comporte au moins un agent tensio-actif. Les agents tensio-actifs sont susceptibles d'être mis en œuvre pour remplir plusieurs fonctions dans la couche de protection électro-conductrice. Ils peuvent être introduits dans (C_{A1}), dans (C_{A2}) et/ou après le mélange de (C_{A1}), (C_{A2}) et (B).

Leur rôle se situe principalement dans la formulation de la composition à l'état humide, avant et pendant l'application sur le collecteur de courant, pour, de façon non limitative : améliorer l'aptitude à la dispersion de la charge conductrice de l'électricité, améliorer la stabilité des polymères et copolymères dans la composition, améliorer les propriétés d'étalement du revêtement. Certains agents tensioactifs s'évaporent au cours du traitement thermique, d'autres restent dans la composition de protection.

### Autres composants :

Des charges non-conductrices de l'électricité peuvent également être utilisées dans la composition protectrice en plus de la charge électro-conductrice. Des exemples de charge non conductrice de l'électricité sont : du carbone non conducteur de l'électricité ; des oxydes inorganiques; des résines. La nature et la quantité de charges sont choisies en fonction des propriétés de mise en œuvre (rhéologie) et des propriétés d'usage (propriétés d'adhésion, résistance électrique) de la couche de protection électroconductrice.

On peut également mettre en œuvre dans la composition protectrice, et de façon non limitative : un promoteur d'adhésion afin d'améliorer l'adhérence entre le collecteur de courant et la couche conductrice de l'électricité.

Parmi les promoteurs d'adhésion, on peut citer par exemple un polymère acrylique ou un copolymère oléfine acrylique.

Ces composants peuvent être introduits dans (C_{A1}), dans (C_{A2}), être mélangés avec les charges conductrices (B) et/ou être introduits après le mélange de (C_{A1}), (C_{A2}) et (B).

De préférence, les autres composants représentent au maximum 5% en masse de la masse totale de la couche de revêtement et de la composition aqueuse (G), en matière sèche. Avantageusement, ils représentent au maximum 2% et encore mieux 1% en masse de la masse totale de la couche de revêtement et de la composition aqueuse (G), en matière sèche.

### Couches supplémentaires :

La couche de protection est placée entre le collecteur de courant et la matière active. On peut en outre prévoir qu'une couche d'apprêt soit placée entre le collecteur de courant métallique et la couche de protection, la couche d'apprêt comprenant un liant hydrodispersable et des charges conductrices. Par exemple le liant hydrodispersable peut être un latex de polyuréthanne.

La couche d'apprêt peut comprendre :
- de 60 à 70 % d'au moins un liant hydrodispersable,
- de 30 à 40% de charges conductrices, en masse par rapport à la masse totale de la couche d'apprêt, en matière sèche, le liant hydrodispersable et les charges conductrices représentant de 95 à 100% de la matière sèche de la couche d'apprêt.

Selon une autre variante, une couche d'apprêt peut être placée entre la couche de protection et la couche active. Cette variante est particulièrement intéressante pour les cellules à liquide ionique dont elle augmente la durée de vie. De préférence cette couche est d'une épaisseur comprise entre 5 et 20 micromètres

Par exemple, on procède selon les étapes suivantes, après la formation de la couche de protection et la formation de la couche active :
- Une étape de préparation d'une composition comportant 60% à 70% de liant hydrodispersable, et 30% à 40% de charges conductrices, en complément afin d'atteindre un total de 95 à 100% en poids en matière sèche, diluée dans un solvant aqueux ;
- Une étape de dépôt de la dite composition sur la couche de protection ;
- Une étape de séchage du collecteur de courant métallique.

L'opération de dépôt et de séchage d'une couche d'apprêt peut être répétée autant de fois que nécessaire pour obtenir l'épaisseur souhaitée.

### Procédé de fabrication de l'électrode :

L'invention a encore pour objet un procédé de fabrication d'une électrode comprenant :
1- La fourniture d'un collecteur de courant métallique,
2- La préparation d'une composition aqueuse (G) comprenant :
   Au moins un polymère ou un copolymère époxy et au moins un agent réticulant,
   Au moins un élastomère,
   Des charges conductrices,
3- le dépôt de la composition (G) sur une partie au moins d'une face du collecteur de courant,
4- un premier traitement thermique du collecteur de courant revêtu de (G) à une température allant de 25 à 60°C,
5- un second traitement thermique du collecteur de courant revêtu de la composition (G) séchée, à une température supérieure à la température de transition vitreuse du polymère ou du copolymère époxy réticulé, et inférieure à la température de dégradation du polymère ou du copolymère époxy réticulé,
6- le dépôt d'une couche de matière active sur le collecteur de courant revêtu de la couche de protection ou de la composition (G) simplement séchée.

La composition aqueuse (G) mise en œuvre dans le procédé est celle qui a été décrite ci-dessus, les variantes préférées du procédé correspondant aux variantes préférées pour le choix des composants de (G).

Le procédé de l'invention peut comporter avant le dépôt de la composition aqueuse (G) une préparation du collecteur de courant, cette étape comprenant une ou plusieurs étapes choisies parmi : un traitement abrasif (papier au carbure de silicium par exemple), un décapage chimique (par exemple un lavage à l'acétone, un lavage à l'aide d'un mélange d'acide fluorhydrique et d'acide nitrique).

De façon connue, le dépôt de la composition (G) sur le collecteur de courant peut être réalisé à l'aide d'un tire-film, ou par toute autre méthode connue de l'homme du métier telle que l'application au pinceau, le laminage ...

Le dépôt peut être réalisé sur la totalité d'une face du collecteur de courant ou sur une partie seulement. Le dépôt est réalisé au moins sur la partie du collecteur de courant qui sera immergée dans l'électrolyte.

Après ce dépôt, la composition est séchée par application d'un traitement thermique à une température de préférence de 25 à 60°C, encore mieux de 30 à 50°C. Le traitement est appliqué pendant une durée de 15mn à 1h, de préférence environ 30mn. Cette étape peut par exemple être mise en œuvre en étuve de façon à bénéficier d'une atmosphère contrôlée.

L'étape de dépôt 3- suivie d'un séchage 4- peut être mise en œuvre une seule fois ou elle peut être répétée de façon à augmenter l'épaisseur du dépôt.

De préférence la ou les étape(s) de dépôt sont réalisées de façon à obtenir une épaisseur de dépôt après séchage de 5 à 50 µm.

Une fois que l'on a obtenu un dépôt de l'épaisseur souhaitée, on procède à un second traitement thermique à une température supérieure à la température de transition vitreuse du polymère ou du copolymère époxy, et inférieure à la température de dégradation du polymère ou du copolymère époxy, de façon à former un réseau de polymère par réaction de l'agent de réticulation avec le(s) polymère(s) ou le(s) copolymère(s).

Avantageusement, la température de traitement à l'étape 5- est de 120 à 160°C, préférentiellement de 130 à 150°C.

La matière active qui est mise en œuvre peut être choisie parmi les matières connues de l'art antérieur pour cette utilisation, notamment celles décrites dans la demande FR 2985598.

Dans les cas où la matière active est issue d'une composition aqueuse carbonée, le dépôt et le séchage de la matière active peut comporter les sous étapes suivantes :
(i) - préparation d'une composition aqueuse de matière active par exemple à partir de noir de carbone, d'alcool polyvinylique, d'acide poly(acrylique) et de carboxyméthylcellulose,
(ii) - dépôt de la composition de matière active sur la couche de protection par exemple à l'aide d'un tire-film,
(iii) - traitement thermique de séchage, par exemple pendant 30 minutes à 50°C,
(iv) - traitement thermique de réticulation, par exemple pendant 30 minutes à 140°C.

On peut prévoir que l'étape 6- de dépôt d'une couche de matière active soit réalisé avant l'étape 5- de second traitement thermique. Après la mise en oeuvre des étapes 1- à 4-, on procède aux étapes (i) à (iii) puis on applique l'étape 5- de second traitement thermique qui permet de réticuler simultanément la couche de protection et la couche active.

Le procédé de l'invention peut comporter de façon facultative, entre les étapes 1- et 2- le dépôt d'une couche d'apprêt, telle que décrite ci-dessus, sur le collecteur de courant, suivie du séchage de la couche d'apprêt.

De telles électrodes présentent des propriétés avantageuses lorsqu'elles sont mises en œuvre dans un supercondensateur. Dans un condensateur fonctionnant avec un électrolyte de type liquide ionique, la couche de protection a pour fonction d'améliorer l'adhésion et de réduire la résistance équivalente en série de la matière active sur le collecteur métallique.

Dans un condensateur fonctionnant avec un électrolyte aqueux, la couche de protection a pour fonction de protéger le collecteur de courant contre la corrosion, d'améliorer l'adhésion et de réduire la résistance équivalente en série de la matière active sur le collecteur métallique. Ainsi, elle contribue à augmenter la durée de vie du condensateur.

### Figures :

Figure 1 : représentation schématique de la structure d'un supercondensateur
Figure 2 : représentation schématique du montage mis en œuvre pour réaliser la mesure de résistance transverse (test ESR)
Figure 3 : représentation schématique d'un échantillon pour le test de corrosion dynamique
Figure 4: représentation schématique d'un montage de test de corrosion dynamique

Dans les figures, une même référence est utilisée pour désigner un même élément dans différents schémas.

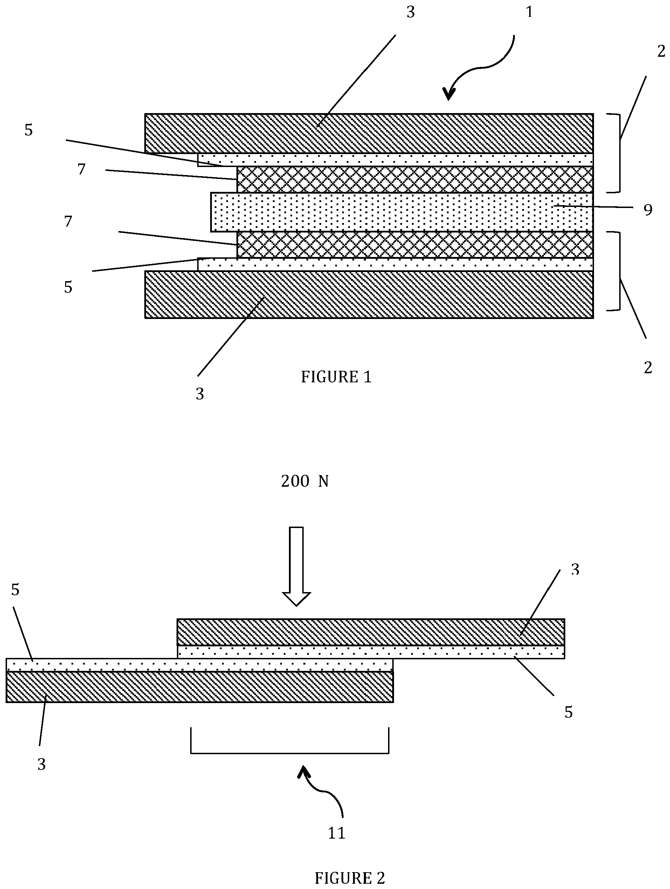

La figure 1 est une représentation schématique de la structure d'un supercondensateur 1. Le supercondensateur 1 comporte deux électrodes conductrices 2 immergées dans un électrolyte ionique (non représenté) et séparées par une membrane isolante appelée séparateur 9, lequel permet la conductivité ionique et évite le contact électrique entre les électrodes 2.

Chaque électrode 2 comporte un collecteur de courant métallique 3, par exemple en cuivre ou aluminium, recouvert d'une couche conductrice de protection 5, par exemple d'une épaisseur comprise entre 5 et 50 micromètres, ainsi qu'une matière active monolithique 7, par exemple en carbone, en contact avec le séparateur 9.

La couche de protection 5 améliore le contact entre le collecteur de courant et la couche active 7, elle protège le collecteur de courant métallique 3 contre les espèces réactives présentes dans l'électrolyte.

La couche de protection 5 est étanche aux électrolytes aqueux notamment en milieu acide, par exemple à un pH inférieur ou égal à 4, ou encore en milieu neutre à un pH de 7. Cette étanchéité permet ainsi une protection du collecteur de courant métallique 3 contre la corrosion en milieux aqueux, empêchant ainsi une détérioration du contact électrique entre ledit collecteur de courant métallique 3 et la matière active monolithique 7.

De plus la couche conductrice de protection 5 permet également une amélioration du contact électrique entre ledit collecteur de courant métallique 3 et la matière active monolithique 7.

Selon un premier mode de réalisation, un dispositif électrochimique de stockage d'énergie est formé par superposition d'une pluralité d'ensembles unitaires multicouches conformes à celui qui est représenté sur la figure 1. Ce premier mode de réalisation correspond typiquement à une structure de supercondensateur.

Le dispositif peut être obtenu par enroulement de l'ensemble unitaire multicouche ou par empilement d'une pluralité d'ensembles unitaires multicouches. L'assemblage présente ainsi un motif répétitif défini par l'ensemble unitaire représenté sur la figure 1.

### Partie expérimentale :

### I-Matériaux et méthodes :

### I - 1. Matériaux :

- Liant (A1) : il est obtenu à partir de la résine RESYDROL AX 906W^{®} (CYTEC) par réticulation. Il s'agit d'une résine dispersée à 35% en phase aqueuse, contenant des fonctions époxy et alkydes. Elle est réticulée par une hexaméthoxyméthylmélamine afin de former un polymère thermodurcissable. Le réticulant utilisé est le CYMEL^{®}303 (CYTEC). Cette réaction est catalysée par un acide para-toluène sulfonique, le CYCAT 4040^{®} (CYTEC) préalablement dispersé dans l'éthanol.
- Liant (A2) :
   LITEX NX 1200^{®} (SYNTHOMER) : latex butadiène-acrylonitrile dispersé à 45% en phase aqueuse
      ou
   PU6800 (ALBERDINGK) : latex polyuréthane dispersé en phase aqueuse à 33%.
- Charges : Les charges conductrices (B) mises en œuvre sont du noir de carbone (ENSACO 260G^{®}) et du graphite (TIMCAL, Timrex KS6L^{®}).
- Additifs : Un tensioactif siliconé est ajouté dans la formulation afin de diminuer la tension de surface et ainsi d'améliorer la mouillabilité du coating sur le substrat. Cet agent est le BYK ^{®} 349.
- Feuillards métalliques : feuille d'aluminium de 20µm d'épaisseur

Dans la partie expérimentale, sauf indication contraire tous les ratios sont donnés en masse.

### I - 2. Méthodes de fabrication des articles :

### - Enduction du revêtement de protection :

55 microns de la composition de protection sont déposés sur la première face d'un feuillard métallique en utilisant un tire-film via un Elcometer^{®} permettant une dépose homogène et contrôlée. Après 30 minutes de séchage à 50°C, les feuillards recouverts sont ensuite traités à 140°C pendant 30 minutes. L'épaisseur de revêtement est mesurée à l'aide d'un micromètre, et est comprise entre 15 à 20 microns. Une deuxième couche est réalisée de la même façon afin d'obtenir une épaisseur totale de 35µm environ.

### - Fabrication de cellules :

L'enduction du revêtement est la même que décrit ci-dessus.

Variante 1 (électrodes des tableaux 7 à 12) : A la suite, les feuillards revêtus destinés à la première électrode sont enduits de 305 µm de matière active préparée suivant l'exemple 1 de la demande FR 2985598, de sorte que l'on obtient une épaisseur de couche active de 150µm après séchage 30 min à 50°C. L'ensemble des couches est réticulé simultanément 30min à 140°C.

Le même procédé est réalisé pour fabriquer la deuxième électrode, avec une épaisseur sèche de matière active de 90 µm, soit 155 µm humide.

### Variante 2 (électrodes du tableau 13) :

On dépose sur la couche de revêtement 55 µm d'une couche d'apprêt définie dans le tableau A (formulation 4). Le collecteur de courant métallique est soumis à un séchage pendant une durée de 30 min à une température de 50°C de sorte à obtenir une couche d'une épaisseur de 20 + 3 micromètres. La même quantité est déposée sur les deux électrodes.

Les feuillards revêtus destinés à la première électrode sont enduits de 410 µm de matière active selon l'exemple 1 de la demande FR 2985598, de sorte que l'on obtient une épaisseur de couche active de 200 µm après séchage 30 min à 50°C. L'ensemble des couches est réticulé simultanément pendant 30 minutes à 140°C.

Le même procédé est réalisé pour la deuxième électrode, avec une masse sèche de matière active recto verso de 150 µm, soit 305 µm humide.

Les cellules modèles sont obtenues par assemblage des deux électrodes entre lesquelles est placé un séparateur cellulosique.

Cellule à électrolyte aqueux : l'ensemble est rempli d'électrolyte de nitrate de lithium 5M dans l'eau et protégé entre deux films plastiques 90µm thermosoudables.

Cellule à liquide ionique : l'ensemble est rempli, sous atmosphère contrôlé, de EMIM BF4 à 98% (1-éthyl 3-méthylimidazolium tétrafluoroborate), protégé entre deux films plastiques 90µm thermosoudables.

### I - 3. Méthodes de test et de caractérisation :

Les feuillards recouverts sont caractérisés en mettant en oeuvre quatre méthodes de test différentes :
Test 1 : Un test de résistance transverse (en mΩ) est réalisé en mettant sous pression (200N), un carré 11 de 3 cm² de deux bandelettes de collecteur 3 revêtu d'une couche de protection 5 (figure 2).

Cette mesure permet d'appréhender la compatibilité à l'interface des différentes couches. La résistance mesurée doit être aussi faible que possible pour permettre un fonctionnement à forte puissance du super-condensateur.

Pour évaluer la résistance du système, la loi d'Ohm U= RI est utilisée.

L'intensité du courant est fixée à 1 ampère et un balayage de potentiel est effectué. Une droite I=f(U) est alors obtenue. La résistance peut être calculée. Le logiciel utilisé afin de traiter les données est le logiciel EC-Lab ^{®}.

Le cahier des charges est le suivant : Résistance transverse collecteur + revêtement < 50 mΩ

Test 2 : Un test à l'enroulement autour d'un mandrin permet d'examiner l'aptitude à l'allongement et à l'adhérence d'un collecteur revêtu d'une couche de protection. Tout endommagement comme par exemple les fissures et/ou les écailles est décelé visuellement.

Le revêtement est appliqué sur le collecteur métallique, dans les mêmes conditions que décrit ci-dessus. Lors de l'essai, on plie uniformément l'échantillon pendant 1 à 2 secondes sur 180° autour du mandrin. On commence le pliage par le diamètre de pliage le plus grand et on continue l'essai jusqu'au diamètre pour lequel le revêtement laisse apparaitre des fissures. Dans les tests mis en œuvre dans le cadre de l'invention, ce test doit être validé pour un mandrin de 3mm de diamètre. Les mandrins de référence PF 5710 ^{®} proviennent de la société BYK.

Le cahier des charges est le suivant : Enroulement sans fissure autour d'un mandrin de 3mm de diamètre

### Test 3 : Une mesure de corrosion dynamique à température ambiante

Cette mesure repose sur un montage 3 électrodes sous 0.8V.

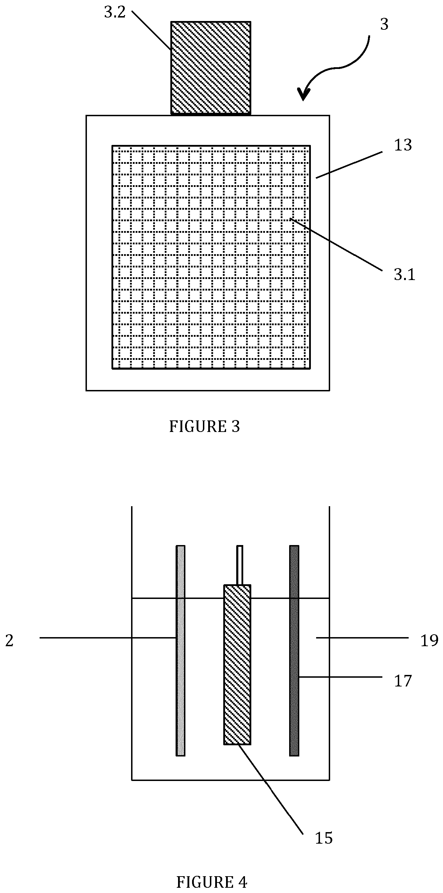

Les trois électrodes utilisées sont (figure 4) :
- une électrode de référence au calomel saturée 15,
- une électrode de travail 2 (représentée de façon détaillée sur la figure 3) constituée du collecteur 3 recouvert du revêtement de protection sur une partie de sa surface 3.1 et non revêtu sur la partie 3.2 qui n'est pas immergée dans l'électrolyte, un revêtement par un film plastique 13 protège le verso (non représenté) et les bords du collecteur 3
- une contre électrode 17 en acier inoxydable. Les trois électrodes sont plongées dans un bécher rempli d'électrolyte 19 de 180mL.

Un courant est alors envoyé dans les électrodes. Dans le contexte de la présente invention, le courant envoyé est de 0,8 V car la solution est une solution aqueuse.

Le but de ce test est d'évaluer la variation de l'intensité du courant en fonction du temps. Si I est constant, il n'y a pas de corrosion, si I n'est pas constant, c'est qu'un phénomène de corrosion est présent.

Si le revêtement conducteur de protection tient 23h alors le test est validé.

L'objectif de cette mesure est de forcer l'oxydation donc la passivation de l'aluminium pour évaluer les performances du système dans des conditions au plus proche de cas réels. Ce test est réalisé uniquement si tous les autres tests sont validés.

### Test 3+ : mesure de corrosion dynamique à 60°C

Pour certaines applications, en particulier dans l'automobile quand le supercondensateur doit être placé à proximité d'un point chaud, une haute résistance en température, jusqu'à 60 °C peut être nécessaire. C'est pourquoi un test de corrosion dynamique à 60°C a également été effectué dans certains cas. Ce test est optionnel à ce moment-là. Sa mise en œuvre est identique à l'exception de la température du montage qui est portée à 60°C pendant toute la durée du test. Si le revêtement conducteur de protection tient 40h alors le test est validé.

### Test 4 : mesure des performances d'une électrode dans la cellule à électrolyte aqueux

A partir d'une cellule comprenant les électrodes selon l'invention on effectue un cyclage à température ambiante et un cyclage à 60°C. On met en œuvre des cycles de charge - décharge de 0 à 1,5V. On réalise un test ESR initial et final du système complet après 90 000 cycles pour le test à température ambiante et après 10 000 cycles pour le test à 60°C.

Le cahier des charges est :
ESR final < 2 x ESR initial pour un cyclage à température ambiante > 90 000 cycles
ESR final < 2 x ESR initial pour un cyclage à 60°C > 10 000 cycles.

### Test 5 : mesure des performances d'une électrode dans la cellule à électrolyte ionique

Le test se déroule comme le test 4 ci-dessus, avec des cycles de charge - décharge de 0 à 3V. L'évaluation des performances globales du système (collecteur + coating de protection + matière active) est réalisée au sein de cellules fermées.

Le cahier des charges est le suivant :
- Voltage (V) > 3
- Capacité (F) > 10
- ESR (mΩ) < 70

### Test 6 : mesure en calendaire des performances d'une électrode dans la cellule à électrolyte ionique

A partir d'une cellule comprenant les électrodes selon l'invention, on applique une tension continue (3V) à température ambiante. L'évaluation des performances globales du système (collecteur + revêtements + matière active) est réalisée au sein de cellules fermées.

Le cahier des charges est le suivant :
- Voltage (V) > 3
- Capacité (F) > 10
- ESR (mΩ) < 70

Le test est arrêté lorsque la cellule devient en court-circuit.

### II- Réalisation de revêtements en vue de la fabrication d'un super-condensateur fonctionnant avec un électrolyte aqueux :

Ci-après sont illustrés des exemples de formulations pour la fabrication d'une couche conductrice de protection destinée à revêtir un collecteur de courant métallique.

### II - 1. Formulations

### - Formulation 1 (F1.1 et F1.2): résine époxy dispersée en phase aqueuse

Différents compositions décrites dans le tableau 1 sont mélangées pour donner une pâte. La formulation est exprimée à 100% avant ajout du catalyseur en dispersion dans l'éthanol.

Le solvant est l'eau. L'extrait sec de la formulation complète (incluant l'éthanol) est de 40%.

**Tableau 1 : Composition de la formulation 1**

| Formulation 1 : | F1.1 | F1.2 |
|---|---|---|
| RESYDROL AX906W 35% dans l'eau | 42.45 | 43.18 |
| BYK 349 | 0.30 | 0.31 |
| EAU | 31.40 | 31.94 |
| TIMREX KS6L | 6.73 | 6.85 |
| ENSACO 260G | 13.46 | 13.69 |
| CYMEL 303 98% dans l'eau | 5.66 | 4.03 |
| *Total humide* | 100.00 | 100.00 |
| CYCAT 4040 40% dans isopropanol | 0.075 | 0.075 |
| ETHANOL | 10.00 | 10.00 |

On a ensuite fait varier le pourcentage catalyseur/réticulant à partir de la formulation F1.1

**Tableau 2 : Variantes de la formulation 1 avec variation du pourcentage de catalyseur dans la formule F1.1**

| Formulation 1 | F1.3 | F1.4 | F1.1 | F1.5 | F1.6 | F1.7 |
|---|---|---|---|---|---|---|
| RESYDROL AX906W 35% dans l'eau | 42.45 | 42.45 | 42.45 | 42.45 | 42.45 | 42.45 |
| BYK 349 | 0.30 | 0.30 | 0.30 | 0.30 | 0.30 | 0.30 |
| EAU | 31.40 | 31.40 | 31.40 | 31.40 | 31.40 | 31.40 |
| TIMREX KS6L | 6.73 | 6.73 | 6.73 | 6.73 | 6.73 | 6.73 |
| ENSACO 260G | 13.46 | 13.46 | 13.46 | 13.46 | 13.46 | 13.46 |
| CYMEL 303 98% dans l'eau | 5.66 | 5.66 | 5.66 | 5.66 | 5.66 | 5.66 |
| *Total humide* | 100.00 | 100.00 | 100.00 | 100.00 | 100.00 | 100.00 |
| CYCAT 4040 | 0.019 | 0.034 | 0.075 | 0.150 | 0.226 | 0.301 |
| ETHANOL | 10.00 | 10.00 | 10.00 | 10.00 | 10.00 | 10.00 |

### Formulation 2 : choix et formulation d'un latex qui sera ajouté à la formulation1

Pour améliorer les performances de la formulation à base de résine époxy, il est rajouté à cette pâte une formulation de latex choisie parmi celles décrites dans le tableau 3. Ces deux dispersions ont été utilisées car elles sont compatibles avec la résine époxy elle-même dispersée en phase aqueuse.

**Tableau 3 : Composition à base de latex Litex ^{®} et de PU**

| Formulation 2 | F2.1 | F2.2 |
|---|---|---|
| LITEX NX 1200 à 45% | 92.38 | 0 |
| PU 6800 à 33% | 0 | 84.35 |
| TIMREX KS6L | 5.07 | 5.21 |
| ENSACO 260G | 2.55 | 10.43 |
| *Total humide* | 100.00 | 100.00 |
| Extrait sec | 49% | 44% |

### Formulation 3 : compositions de revêtement issues des mélanges de la formulation 1 et de la formulation 2

Le ratio en masse humide formulation 1 / formulation 2 est compris entre 90/10 et 85/15. La composition de revêtement comprenant la formulation 1 + la formulation 2 est appelée formulation 3 et a un extrait sec de 37.6%.

**Tableau 4 : Compositions de la formulation 3**

| Formulation 3 : | F3.1 | F3.2 | F3.3 |
|---|---|---|---|
| F1.1/F2.1 | 85/15 | 0 | 0 |
| F1.2/F2.1 | 0 | 85/15 | 0 |
| F1.2/F2.2 | 0 | 0 | 60/40 |
| Isopropanol | 1.5 | 1.5 | 1.5 |

A partir de la formulation F3.1, différents ratios de catalyseur ont été testés

**Tableau 5 : Variantes de la formulation 3 (quantité de catalyseur)**

| Formulation 3 : | F3.4 | F3.5 | F3.1 | F3.6 | F3.7 | F3.8 |
|---|---|---|---|---|---|---|
| F1.3/F2.1 | 85/15 | | | | | |
| F1.4/F2.1 | | 85/15 | | | | |
| F1.1/F2.1 | | | 85/15 | 0 | | |
| F1.5/F2.1 | | | 0 | 85/15 | | |
| F1.6/F2.1 | | | | | 85/15 | |
| F1.7/F2.1 | | | | | | 85/15 |
| Isopropanol | 1.5 | 1.5 | 1.5 | 1.5 | 1.5 | 1.5 |

A partir de la formulation F3.1, différents ratios de base flexibilisante ont été testés.

**Tableau 6 : Variantes de la formulation 3 (ratio de latex)**

| Formulation 3 : | F3.1 | F3.9 |
|---|---|---|
| F1.1/F2.1 | 85/15 | 90/10 |
| Isopropanol | 1,5 | 1,5 |

### Formulation 4 : Couche d'apprêt

**Tableau A : Formulation 4**

| Formulation 4 | Masse humide (g) | Masse sèche |
|---|---|---|
| PU 6800 à 33% | 500,00 | 165,00 |
| ENSACO 260G | 60,00 | 60,00 |
| TIMREX KS6L | 30,00 | 30,00 |
| Total | 590,00 | 255,00 |

| | | |
|---|---|---|
| Extrait sec : 45% | | |

### II - 2. Résultats :

| Formulation 1 (contre-exemples) : | F1.1 | F1.2 | Contrôle (^{∗}) |
|---|---|---|---|
| Test 1 : Résistance à 200N (mΩ) | 93 | 74 | 8,0 |
| Test 2: Enroulement sur mandrin Ø = 3mm | - | - | + |

| | | | |
|---|---|---|---|
| (^{∗}) Feuillard sans revêtement | | | |

### Tableau 7 : Propriétés des aluminiums 20µm revêtus avec la formulation 1

On constate que la flexibilité du revêtement n'est pas satisfaisante. En outre sa résistance à 200N est trop élevée.

**Tableau 8 : Propriétés des aluminiums 20µm revêtus avec la formule 3**

| Formulation 3 : | F3.1 | F3.2 | F3.3 | Contrôle (^{∗}) |
|---|---|---|---|---|
| Test 1 : Résistance à 200N suivant schéma 1 (mΩ) | 30 | 45 | 31 | 8,0 |
| Test 2: Enroulement sur mandrin Ø = 3mm | + | + | + | + |
| Test 3 : Corrosion dynamique 23h, Tamb | + | + | + | - |

| | | | | |
|---|---|---|---|---|
| (^{∗}) Feuillard sans revêtement | | | | |

Afin d'optimiser la réticulation, une étude sur le pourcentage catalyseur/réticulant a été menée à partir de la formulation F3.1.

**Tableau 9: Propriétés des aluminiums 20µm avec différents pourcentages de catalyseur dans la formulation 3**

| Formulation 3 : | F3.4 | F3.5 | F3.1 | F3.6 | F3.7 | F3.8 | Contrôle (^{∗}) |
|---|---|---|---|---|---|---|---|
| Test 1 : Résistance à 200N suivant schéma 1 (mΩ) | 34 | 39 | 30 | 31 | 27 | 38 | 8.0 |
| Test 2 : Enroulement sur mandrin Ø = 3mm | + | + | + | + | + | + | + |
| Test 3 : Corrosion dynamique 23h, Tamb | + | + | + | + | + | + | - |

| | | | | | | | |
|---|---|---|---|---|---|---|---|
| (^{∗}) Feuillard sans revêtement | | | | | | | |

**Tableau 10 : Propriétés des aluminiums 20µm revêtus avec différents ratio de base latex dans la formulation**

| Formulation 3 : | F3.1 | F3.9 |
|---|---|---|
| Test 1 : Résistance à 200N suivant schéma 1 (mΩ) | 30 | 29 |
| Test 2 : Enroulement sur mandrin Ø = 3mm | + | + |
| Test 3 : Corrosion dynamique 23h, Tamb | + | + |
| Test 3+: Corrosion dynamique 40h 60°C 0.8V | + | + |

Ainsi que le montrent les résultats figurant dans les tableaux 8, 9 et 10, la couche conductrice de protection base aqueuse de la formulation 3 permet de diminuer la résistance du collecteur revêtu d'une couche de protection et de protéger le collecteur métallique de la dégradation liée à l'oxygénation en présence d'électrolyte aqueux.

Comme stipulé dans le cahier des charges, les formules F3.9 et F3.1 ont passé les 4 tests de caractérisations. La formule F3.1 a été évaluée en corrosion dynamique à 60°C.

### - Cellule à électrolyte aqueux

| | F3.1 | Contrôle (^{∗}) |
|---|---|---|
| Test 5 : ESR cellules (mΩ) | 37 | /////// |
| Cyclage à température ambiante | > 90 000 | ≈ 0 |
| Cyclage à 60 °C | 10 000 | ≈ 0 |

| | | |
|---|---|---|
| (^{∗}) Feuillard sans revêtement et avec une couche de matière active | | |

### Tableau 11 : caractérisations d'une cellule à électrolyte aqueux préparée à partir du revêtement F3.1

### - Cellule à électrolyte ionique (première variante) :

La cellule est testée suivant le protocole de test 5.

**Tableau 12 : caractérisations d'une cellule à liquide ionique préparée à partir du revêtement F3.1 selon la variante 1**

| | F3.1 |
|---|---|
| V max (V) | 3 |
| Capa décharge (F) | 9.6 |
| Rendement Energétique (%) | 95.4 |
| ESR (mΩ) | 61 |

### - Cellule à électrolyte ionique (seconde variante) :

La cellule est testée suivant le protocole de test 6.

**Tableau 13 : caractérisations d'une cellule liquide ionique préparée à partir du revêtement F3.1 + apprêt selon la variante 2**

| | F3.1 + apprêt | Contrôle (^{∗}) |
|---|---|---|
| V max (V) | 3 | |
| Capa charge / décharge (F) | 14,7/14,0 | |
| Rendement capacitif (%) | 95,4 | |
| Rendement Energétique (%) | 76,6 | |
| ESR (mΩ) | 48 | |
| Cyclage à température ambiante | >2000 h | 0 (^{∗∗}) |

| | | |
|---|---|---|
| (^{∗}) Feuillard sans revêtement et avec une couche de matière active (^{∗∗}) Mauvaise adhésion de la matière | | |

## Revendications

1. Electrode (2) pour le stockage de l'énergie électrique comprenant un collecteur de courant métallique (3) et une matière active (7), le collecteur de courant (3) étant revêtu sur au moins une partie de l'une de ses faces par au moins une couche de protection (5) placée entre le collecteur de courant (3) et la matière active (7), la couche de protection (5) comprenant :
(A) Une matrice de polymère comprenant :
(A1) Au moins un polymère ou un copolymère époxy réticulé,
(A2) Au moins un élastomère,
(B) Des charges conductrices,
**Caractérisé en ce que** la couche de protection (5) comprend :
- de 30 à 60 % d'au moins un polymère ou un copolymère époxy réticulé (A1),
- de 10 à 30 % d'au moins un élastomère (A2),
- de 30 à 50 % de charges conductrices (B),
la somme des masses de (A1), (A2) et (B) représente de 95 à 100 %,
en masse de matière sèche, par rapport à la masse totale de matière sèche de la couche de protection (5).

2. Electrode (2) selon la revendication 1, dans laquelle la couche de protection (5) est obtenue par le séchage et la réticulation d'une composition aqueuse (G) comprenant :
- des précurseurs de la matrice de polymère (A) :
- des précurseurs de polymère(s) ou de copolymère(s) époxy réticulé(s) (A1)
- au moins un élastomère (A2),
- des charges conductrices (B).

3. Electrode (2) selon la revendication 1 ou la revendication 2, dans laquelle le collecteur de courant (3) est en aluminium ou en cuivre.

4. Electrode selon l'une quelconque des revendications précédentes, dans laquelle (A2) est choisi parmi : les élastomères ayant une température de filmification inférieure à 20°C.

5. Electrode (2) selon l'une quelconque des revendications précédentes, dans laquelle (A1) est choisi parmi : un polymère époxy réticulé, un copolymère époxy-alkyde réticulé, un mélange de polymère époxy et de résine alkyde réticulé.

6. Electrode (2) selon l'une quelconque des revendications précédentes, dans laquelle (A2) est choisi parmi les latex butadiène-acrylonitrile (NBR) et les latex polyuréthanes.

7. Electrode (2) selon l'une quelconque des revendications précédentes, dans laquelle (B) est choisi parmi : les mélanges de noir de carbone et de graphite.

8. Electrode (2) selon l'une quelconque des revendications précédentes, dans laquelle :
- la composition de polymère (A) représente de 50 à 70 %,
- les charges conductrices (B) représentent de 30 à 50 %,
et la somme des masses de (A) et de (B) représente de 95 à 100 %,
en masse de matière sèche, par rapport à la masse totale de matière sèche de la couche de protection (5).

9. Electrode selon l'une quelconque des revendications précédentes, dans laquelle la couche de protection (5) présente une épaisseur allant de 5 à 50 µm.

10. Procédé de fabrication d'une électrode (2) comprenant :
1- La fourniture d'un collecteur de courant métallique (3),
2- La préparation d'une composition aqueuse (G),
3- le dépôt de la composition (G) sur une partie au moins d'une face du collecteur de courant (3),
4- un premier traitement thermique de séchage de la composition (G),
5- un second traitement thermique du collecteur de courant (3) revêtu à une température supérieure à la température de transition vitreuse du polymère ou du copolymère époxy réticulé (A1), et inférieure à la température de dégradation du polymère ou du copolymère époxy réticulé (A1),
6- le dépôt d'une couche de matière active sur le collecteur (3) de courant revêtu,
Ce procédé étant **caractérisé en ce que** la composition aqueuse (G) comprend :
- de 30 à 60 % de précurseurs d'une matrice époxy réticulée (A1),
- de 10 à 30 % d'au moins un élastomère (A2),
- de 30 à 50 % de charges conductrices (B)
et la somme des masses de (A1), (A2) et (B) représente de 95 à 100 %,
en masse de matière sèche, par rapport à la masse totale de matière sèche de la composition aqueuse (G).

11. Supercondensateur (1) comprenant deux électrodes (2) dont au moins une partie est immergée dans un électrolyte ionique, les deux électrodes (2) étant séparées par une membrane isolante (9), l'une au moins des deux électrodes étant selon l'une des revendications 1 à 9.

12. Supercondensateur (1) selon la revendication 11 dans lequel l'électrolyte est un électrolyte aqueux.

13. Supercondensateur (1) selon la revendication 11 ou selon la revendication 12 dans lequel l'électrolyte est un liquide ionique.

14. Supercondensateur (1) selon l'une quelconque des revendications 11 à 13 dont les deux électrodes sont selon l'une quelconque des revendications 1 à 9.

## Patentansprüche

1. Elektrode (2) zum Speichern von elektrischer Energie, umfassend einen metallischen Stromkollektor (3) und ein Aktivmaterial (7), wobei der Stromkollektor (3) auf mindestens einem Teil einer seiner Seiten mit mindestens einer Schutzschicht (5) beschichtet ist, die zwischen dem Stromkollektor (3) und dem Aktivmaterial (7) platziert ist, wobei die Schutzschicht (5) Folgendes umfasst:
(A) eine Polymermatrix, umfassend:
(A1) mindestens ein vernetztes Epoxypolymer oder -copolymer,
(A2) mindestens ein Elastomer,
(B) leitfähige Füllstoffe,
**dadurch gekennzeichnet, dass** die Schutzschicht (5) Folgendes umfasst:
- 30 bis 60 % mindestens eines vernetzten Epoxypolymers oder - copolymers (A1),
- 10 bis 30 % mindestens eines Elastomers (A2),
- 30 bis 50 % leitfähige Füllstoffe (B),
wobei die Summe der Massen von (A1), (A2) und (B) 95 bis 100 % der Trockenmasse, bezogen auf die Gesamt-Trockenmasse der Schutzschicht (5), ausmacht.

2. Elektrode (2) nach Anspruch 1, wobei die Schutzschicht (5) durch Trocknen und Vernetzen einer wässrigen Zusammensetzung (G) erhalten wird, die Folgendes umfasst:
- Vorstufen der Polymermatrix (A):
- Vorstufen des vernetzten Epoxypolymers oder -copolymers (A1)
- mindestens ein Elastomer (A2),
- leitfähige Füllstoffe (B).

3. Elektrode (2) nach Anspruch 1 oder Anspruch 2, wobei der Stromkollektor (3) aus Aluminium oder Kupfer ist.

4. Elektrode (2) nach einem der vorhergehenden Ansprüche, wobei (A2) ausgewählt ist aus: Elastomeren mit einer Filmbildungstemperatur von weniger als 20 °C.

5. Elektrode (2) nach einem der vorhergehenden Ansprüche, wobei (A1) ausgewählt ist aus: einem vernetzten Epoxypolymer, einem vernetzten Epoxy-Alkyd-Copolymer, einem Gemisch von vernetztem Epoxypolymer und Alkyd-Harz.

6. Elektrode (2) nach einem der vorhergehenden Ansprüche, wobei (A2) aus Butadien-Acrylnitril(NBR)-Latices und Polyurethan-Latices ausgewählt ist.

7. Elektrode (2) nach einem der vorhergehenden Ansprüche, wobei (B) ausgewählt ist aus: Gemischen von Ruß und Graphit.

8. Elektrode (2) nach einem der vorhergehenden Ansprüche, wobei:
- die Polymerzusammensetzung (A) 50 bis 70 % der Trockenmasse ausmacht,
- die leitfähigen Füllstoffe (B) 30 bis 50 % der Trockenmasse ausmachen und die Summe der Massen von (A) und (B) 95 bis 100 % der Trockenmasse, jeweils bezogen auf die Gesamt-Trockenmasse der Schutzschicht (5), ausmachen.

9. Elektrode nach einem der vorhergehenden Ansprüche, wobei die Schutzschicht (5) eine Dicke im Bereich von 5 bis 50 µm aufweist.

10. Verfahren zur Herstellung einer Elektrode (2), umfassend:
1 - Bereitstellen eines metallischen Stromkollektors (3),
2 - Herstellen einer wässrigen Zusammensetzung (G),
3 - Aufbringen der Zusammensetzung (G) auf mindestens einen Teil einer Seite des Stromkollektors (3),
4 - eine erste thermische Trocknungsbehandlung der Zusammensetzung (G),
5 - eine zweite thermische Behandlung des beschichteten Stromkollektors (3) bei einer Temperatur oberhalb der Glasübergangstemperatur des vernetzten Epoxypolymers oder -copolymers (A1) und unterhalb der Zersetzungstemperatur des vernetzten Epoxypolymers oder -copolymers (A1),
6 - Abscheiden einer Schicht aus Aktivmaterial auf dem beschichteten Stromkollektor (3),
wobei das Verfahren **dadurch gekennzeichnet ist, dass** die wässrige Zusammensetzung (G) Folgendes umfasst:
- 30 bis 60 % Vorstufen einer vernetzten Epoxymatrix (A1),
- 10 bis 30 % mindestens eines Elastomers (A2),
- 30 bis 50 % leitfähige Füllstoffe (B),
und die Summe der Massen von (A1), (A2) und (B) 95 bis 100 % der Trockenmasse, bezogen auf die Gesamt-Trockenmasse der wässrigen Zusammensetzung (G), ausmacht.

11. Superkondensator (1), der zwei Elektroden (2) umfasst, von denen mindestens ein Teil in einen ionischen Elektrolyten eingetaucht ist, wobei die beiden Elektroden (2) durch eine isolierende Membran (9) getrennt sind, wobei mindestens eine der beiden Elektroden eine Elektrode nach einem der Ansprüche 1 bis 9 ist.

12. Superkondensator (1) nach Anspruch 11, wobei der Elektrolyt ein wässriger Elektrolyt ist.

13. Superkondensator (1) nach Anspruch 11 oder Anspruch 12, wobei der Elektrolyt eine ionische Flüssigkeit ist.

14. Superkondensator (1) nach einem der Ansprüche 11 bis 13, bei dem beide Elektroden Elektroden nach einem der Ansprüche 1 bis 9 sind.

## Claims

1. An electrode (2) for electrical energy storage comprising a metallic current collector (3) and an active material (7), the current collector (3) being coated on at least one portion of one of its faces with at least one protective layer (5) placed between the current collector (3) and the active material (7), the protective layer (5) comprising:
(A) A polymer matrix comprising:
(A1) At least one crosslinked epoxy polymer or copolymer,
(A2) At least one elastomer,
(B) Conductive fillers,
**characterized in that** the protective layer (5) comprises:
- from 30 to 60% of at least one crosslinked epoxy polymer or copolymer (A1),
- from 10 to 30% of at least one elastomer (A2),
- from 30 to 50% of conductive fillers (B),
the sum of the weights of (A1), (A2) and (B) represents from 95 to 100%,
by weight of dry matter, relative to the total weight of dry matter of the protective layer (5).

2. The electrode (2) as claimed in claim 1, in which the protective layer (5) is obtained by drying and crosslinking an aqueous composition (G) comprising:
- precursors of the polymer matrix (A):
- precursors of crosslinked epoxy polymer(s) or copolymer(s) (A1)
- at least one elastomer (A2),
- conductive fillers (B).

3. The electrode (2) as claimed in claim 1 or claim 2, in which the current collector (3) is made of aluminium or copper.

4. The electrode as claimed in any one of the preceding claims, in which (A2) is selected from: the elastomers having a film-forming temperature below 20°C.

5. The electrode (2) as claimed in any one of the preceding claims, in which (A1) is selected from: a crosslinked epoxy polymer, a crosslinked epoxy-alkyd copolymer, a mixture of epoxy polymer and crosslinked alkyd resin.

6. The electrode (2) as claimed in any one of the preceding claims, in which (A2) is selected from butadiene-acrylonitrile (NBR) latices and polyurethane latices.

7. The electrode (2) as claimed in any one of the preceding claims, in which (B) is selected from: mixtures of carbon black and graphite.

8. The electrode (2) as claimed in any one of the preceding claims, in which:
- the polymer composition (A) represents from 50 to 70%,
- the conductive fillers (B) represent from 30 to 50%,
and the sum of the weights of (A) and (B) represents from 95 to 100%,
by weight of dry matter, relative to the total weight of dry matter of the protective layer (5).

9. The electrode as claimed in any one of the preceding claims, in which the protective layer (5) has a thickness in the range from 5 to 50 µm.

10. An electrode fabrication process (2) comprising:
1- supplying a metallic current collector (3),
2- preparing an aqueous composition (G),
3- depositing the composition (G) on at least one portion of one face of the current collector (3),
4- a first thermal treatment for drying the composition (G),
5- a second thermal treatment of the coated current collector (3) at a temperature above the glass transition temperature of the crosslinked epoxy polymer or copolymer (A1), and below the degradation temperature of the crosslinked epoxy polymer or copolymer (A1),
6- depositing a layer of active material on the coated current collector (3), the process being **characterized in that** composition (G) comprises:
- from 30 to 60% of precursors of a crosslinked epoxy matrix (A1),
- from 10 to 30% of at least one elastomer (A2),
- from 30 to 50% of conductive fillers (B),
the sum of the weights of (A1), (A2) and (B) represents from 95 to 100%,
by weight of dry matter, relative to the total weight of dry matter of the aqueous composition (G).

11. A supercapacitor (1) comprising two electrodes (2), at least one portion of which is immersed in an ionic electrolyte, the two electrodes (2) being separated by an insulating membrane (9), at least one of the two electrodes being as claimed in one of claims 1 to 9.

12. The supercapacitor (1) as claimed in claim 11, in which the electrolyte is an aqueous electrolyte.

13. The supercapacitor (1) as claimed in claim 11 or as claimed in claim 12, in which the electrolyte is an ionic liquid.

14. The supercapacitor (1) as claimed in any one of claims 11 to 13, the two electrodes of which are as claimed in any one of claims 1 to 9.
